Europäisches Patentamt

European Patent Office

Office européen des brevets

(19)

(11) Numéro de publication : **0 457 655 A1**

## (12) DEMANDE DE BREVET EUROPEEN

(21) Numéro de dépôt : **91401202.6**

(22) Date de dépôt : **07.05.91**

(51) Int. Cl.⁵ : **G06F 1/00**

(30) Priorité : 16.05.90 FR 9006112

(43) Date de publication de la demande :
21.11.91 Bulletin 91/47

(84) Etats contractants désignés :
BE DE ES GB IT NL SE

(71) Demandeur : **TELEMECANIQUE**
**43-45, Boulevard Franklin Roosevelt**
**F-92504 Rueil-Malmaison Cedex (FR)**

(72) Inventeur : **Barillier, Gilbert**
**Les Sausses**
**F-06510 Gattiers (FR)**
Inventeur : **Jaraudias, Patrice**
**Mas de Romarins, Villa 3, Chemin de la**
**Campanette**
**F-06800 Cagnes-sur-Mer (FR)**
Inventeur : **Tournier, Yves**
**Chemin des Quatre Vents Prolongé**
**F-06140 Vence (FR)**

(74) Mandataire : **Bouju, André**
**Cabinet André Bouju, B.P. 6250**
**F-75818 Paris Cédex 17 (FR)**

(54) **Procédé de configuration d'un poste de travail informatique et système pour sa mise en oeuvre.**

(57) Procédé de configuration d'un poste de travail informatique (1,10) sur lequel sont implantés plusieurs logiciels (La,Lb,Lc) à chacun desquels sont associés des droits d'utilisation respectifs contenus dans un module clé original distinct (Ca,Cb,Cc) destiné à coopérer avec ledit poste de travail (1,10) pour autoriser une continuité d'exploitation dudit logiciel (La,Lb,Lc).

Le procédé comprend une succession d'étapes de transfert (II,III), chaque étape de transfert (II,III) réalisant l'union de droits contenus initialement dans deux modules clés (Ca,Cb ;Cc,Cab) et leur transfert dans l'un (Cab,Cabc) desdits modules clés, l'autre module clé (Ca0,Cc0) étant rendu vide de tout droit, de sorte qu'à l'issue de cette succession d'étapes de transfert (II,III), on dispose d'un module clé original unique (Cabc) contenant l'ensemble des droits d'utilisation associés aux logicieLs implantés (La,Lb,Lc) sur le poste de travail (1,10), l'ensemble des autres modules clés (Ca0,Cc0) étant rendus vides de tout droit.

Utilisation notamment en informatique industrielle et pour le contrôle de l'utilisation de Logiciels protégés.

EP 0 457 655 A1

FIG_1

La présente invention concerne un procédé de configuration d'un poste de travail informatique ou d'automatisme industriel. Elle vise également un système pour sa mise en oeuvre.

La duplication et l'utilisation illicites de logiciels, notamment des progiciels d'application scientifique et industrielle sur des postes de travail informatique, constituent un problème majeur pour les auteurs, concepteurs et distributeurs de ces logiciels. Ces opérations frauduleuses qui consistent à usurper des droits d'utilisation sur un ou plusieurs logiciels, en se généralisant constituent un grave péril économique pour des entreprises qui ont souvent consenti des investissements lourds pour le développement et la mise au point de ces logiciels. En outre, le développement considérable du parc de microordinateurs compatibles contribue à aggraver cette situation avec la disponibilité actuelle de nombreux outils logiciels facilitant des opérations illicites sur des logiciels protégés.

Pour faire face à cette situation préjudiciable, les auteurs et distributeurs de logiciel ont fait appel à de nombreux procédés actuels de contrôle de l'utilisation d'un logiciel en fonction de droits d'utilisation qui lui sont associés. Ainsi, on connaît déjà des procédés visant à empêcher la duplication et l'utilisation illicite de logiciels par des verrous de comptage physiques et/ou logiques. On connaît aussi des procédés de contrôle d'utilisation d'un logiciel qui mettent en oeuvre une clé électronique qui est connecté sur un port d'entrée/sortie du microordinateur sur lequel est implanté le logiciel. Ces procédés consistent à tester régulièrement la présence de cette clé grâce à des instructions spécifiques ajoutées au logiciel. Le brevet français 2 579 790 divulgue ainsi un dispositif électronique de protection de l'accès à un logiciel et une clé pour un tel dispositif. De même, le brevet français 2 600 184 divulgue un procédé de protection d'un logiciel informatique et une clé électronique pour la mise en oeuvre de ce procédé. D'autres procédés mettant en oeuvre une clé physique existent actuellement, tel que le logimètre qui échange en permanence des informations avec le logiciel original et permet également un comptage des utilisations.

Cependant les procédés actuels associent une clé à chaque logiciel protégé alors qu'il est actuellement fréquent que sur un même poste de travail informatique, plusieurs logiciels soient installés. Or il se pose alors le problème de la connexion des différentes clés associées aux logiciels utilisés, le nombre de ports d'entrée/sortie d'un poste de travail et notamment d'un microordinateur étant nécessairement limité. Il en est de même lorsque le poste de travail est muni d'un support de clés comportant un nombre limité d'emplacements, par exemple deux, pouvant recevoir des clés. Il est alors nécessaire d'effectuer des manipulations fastidieuses des clés en fonction des logiciels effectivement exécutés. Ces manipulations peuvent en outre être à l'origine de blocages et de pertes de temps et d'efficacité en milieu industriel.

Un poste de travail sur lequel sont installés plusieurs logiciels dont les droits d'utilisation respectifs sont contenus dans des modules clés originaux devient difficilement exploitable par un utilisateur qui devra tenter de gérer au mieux l'insertion des différents modules clés dans les emplacements qui sont à sa disposition en fonction du ou des logiciels requis.

On connaît déjà un procédé de configuration d'un poste de travail informatique, mettant en oeuvre d'une part, pour chaque poste de travail, un module clé maître et, d'autre part, des modules clés d'option contenant chacun les droits d'utilisation d'un logiciel associé destiné à être installé sur le poste de travail. Ce procédé permet notamment de transférer des droits d'utilisation, contenus initialement dans un ou des modules clés d'option, dans le module clé maître. Cependant, ce procédé présente l'inconvénient de devoir disposer de deux types de modules clés - des modules clés de type maître d'une part, et des modules clés de type option d'autre part-, ce qui a pour conséquence de compliquer la gestion de ce mode de protection de logiciel et d'accroître le risque d' erreur de manipulation et de blocage d'exploitation du poste de travail informatique.

Le but de la présente invention est de remédier à ces inconvénients en proposant un procédé de configuration d'un poste de travail informatique sur lequel sont implantés plusieurs logiciels à chacun desquels sont associés des droits d'utilisation respectifs contenus dans un module clé original distinct destiné à coopérer avec ledit poste de travail pour autoriser une continuité d'exploitation dudit logiciel.

Suivant l'invention, le procédé comprend une succession d'étapes de transfert, chaque étape de transfert réalisant l'union de droits contenus initialement dans deux modules clés et leur transfert dans l'un desdits modules clés, l'autre module clé étant rendu vide de tout droit, de sorte qu'à l'issue de cette succession d'étapes de transfert, on dispose d'un module clé original unique contenant l'ensemble des droits d'utilisation associés aux logiciels implantés sur le poste de travail, l'ensemble des autre modules clés étant rendus vides de tout droit.

Ainsi, avec le procédé selon l'invention, le problème posé par le nombre limité d'emplacements de modules clés se trouve résolu puisqu'à l'issue des étapes de transfert successives, un seul module clé contient l'ensemble des droits d'utilisation des différents logiciels implantés sur le poste de travail informatique. En outre, les différentes étapes de transfert s'appliquent à des modules clés qui ont tous un même statut, à savoir celui de contenir des droits d'utilisation correspondant à un ou plusieurs logiciels selon qu'il sont ou non le résultat d'une opération d'union. A la différence de l'art antérieur, il n'est donc pas fait de distinction entre des modules clés maîtres et des modules clés d'option avec le procédé selon l'invention, c    ui contribue à simplifier considérablement la gestic    les modules clés au regard des opérations d'union de droits.

Dans une version avantageuse de l'invention, les étapes de transfert sont réversibles et le procédé comprend en outre , au titre de la réversibilité des étapes de transfert, au moins une opération de partition mettant en oeuvre un module clé original contenant plusieurs ensembles de droits d'utilisation correspondant à des logiciels utilisés sur le poste de travail et un module clé vierge, et au cours de laquelle une partie des droits d'utilisation est transférée dans le module clé initialement vierge, la partie restante étant maintenue dans le module clé original.

Ainsi, la réversibilité des étapes de transfert permet d'isoler de nouveau les droits d'utilisation associés à un logiciel donné au sein d'un module clé lorsque cela est nécessaire. De cette façon, l'utilisateur conserve la possibilité de modifier la distribution des différents droits d'utilisation en pouvant effectuer une partition de logiciels initialement réunis au sein d'un même module clé, ce qui confère ainsi une grande souplesse au procédé de configuration selon l'invention.

Suivant un autre aspect de l'invention, le système de configuration d'un poste de travail informatique sur lequel sont implantés plusieurs logiciels à chacun desquels sont associés des droits d'utilisation respectifs contenus dans un module clé original distinct, mettant en oeuvre le procédé selon les revendications précédentes, comprenant des moyens de support pour recevoir simultanément au moins deux modules clés dans des emplacements adaptés et reliés au poste de travail informatique, est caractérisé en que ces moyens de support coopèrent avec le poste de travail informatique pour générer à partir de deux modules clés originaux contenant chacun des droits d'utilisation associés à un ou plusieurs logiciels, un module clé original contenant alors l'union desdits droits d'utilisation et un module clé vidé de tout droit.

D'autres particularités et avantages de l'invention apparaîtront encore dans la description ci-après. Aux dessins annexés donnés à titre d'exemples non limitatifs:

– la figure 1 est une vue synoptique illustrant les différentes étapes du procédé selon l'invention;
– la figure 2 illustre un agencement des dispositifs mis en oeuvre dans la présente invention lorsqu'une imprimante doit être connectée au microordinateur;
– la figure 3 illustre un autre agencement de l'invention permettant l'utilisation d'un second support de clé;

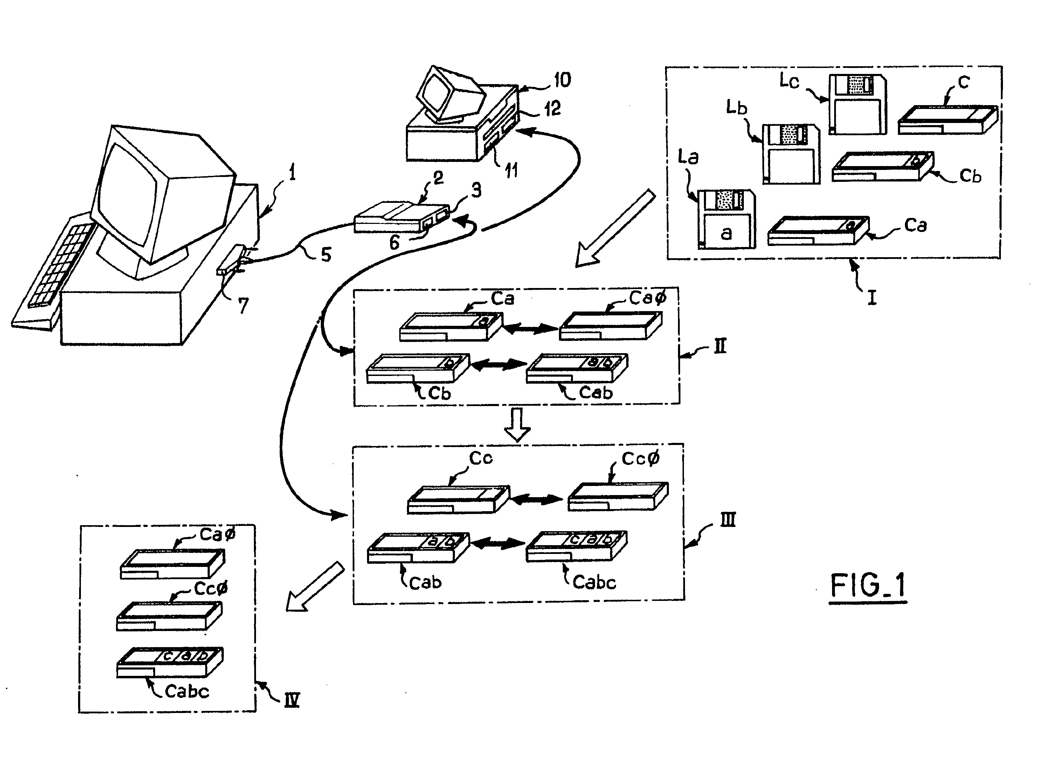

On va maintenant décrire une forme préférée de mise en oeuvre du procédé selon l'invention en même temps que le dispositif permettant cette mise en oeuvre en référence à la figure 1.

Un utilisateur d'un poste de travail informatique, par exemple un microordinateur 1 de type compatible PC ou de type PS de la société IBM ou bien un terminal de programmation spécialisé 10, souhaite pouvoir utiliser sur ce poste de travail plusieurs logiciels distincts à chacun desquels sont associés des droits d'utilisation respectifs. A titre d'exemple, on suppose que l'utilisateur dispose initialement (étape I) de trois logiciels La, Lb, Lc contenus par exemple dans des jeux respectifs de disquette et à chacun desquels est associé un module clé respectif original Ca, Cb, Cc contenant les droits d'utilisation respectifs du logiciel associé.

Ces modules clés sont destinés à être insérés dans des supports de clés qui sont soit externes 2,3,6 dans le cas d'un microordinateur, soit internes 11,12 au poste de travail spécialisé 10. Un support de clé autonome 2 comporte deux logements 3,6 destinés à accueillir des modules clés. Il est connecté au port parallèle 7 du microordinateur 1 par un câble de connexion 5.

Dans une forme effective de réalisation de l'invention, les modules clés utilisés comportent un microcontrôleur qui scrute les signaux présents sur le port d'entrée/sortie auquel est relié le support de clé autonome 2, un oscillateur à quartz délivrant un signal d'horloge pour le microcontrôleur, une logique de contrôle pour la génération de signaux d'initialisation et d'interruption, et une liaison série pour interfacer le module clé au support de clé 2 qui est alimenté de façon autonome par une pile ou une batterie. Il est à noter que d'autres modes d'alimentation d'un module clé peuvent être envisagés, notamment une alimentation via le port d'entrée/sortie.

Le microcontrôleur comprend suivant une structure classique une mémoire permanente, par exemple une mémoire de type EEPROM qui contient, sous une forme codée selon des techniques de codage connues, les droits d'utilisation d'un logiciel qui sont en quelque sorte la traduction codée de la licence d'exploitation du logiciel protégé.

Le procédé selon l'invention pouvant autant s'appliquer à des postes de travail de type microordinateur qu'à des postes spécialisés tels que des terminaux de programmation, la description sera limitée à l'exemple du microordinateur, l'ensemble de la description qui suit pouvant être transposé sans difficulté au cas d'un poste de travail spécialisé.

Deux modules clés originaux, par exemple les modules clés Ca et Cb, correspondant aux droits d'utilisation respectifs des logiciels La et Lb, sont insérés dans les deux logements du support de clé 2. Un logiciel de gestion de clés implanté préalablement sur le poste de travail 1 effectue au cours d'une première étape de transfert II une opération d'union des droits d'utilisation des logiciels La et Lb au sein du module clé Cb qui contenait initialement uniquement les droits d'utilisation du logiciel Lb. Au terme de l'étape de transfert II, le module clé Cb contient maintenant l'union des droits des logiciels La et Lb et est repéré par la référence Cab. A l'issue de cette opération d'union, le module clé Ca qui contenait initialement les droits d'utilisation du logiciel La est vidé de tous droits et devient un modulé vide ou vierge Ca0. Il est à noter que l'étape de transfert précitée II est de nature réversible, le logiciel de gestion de clés pouvant commander une opération inverse de partition.

L'opération d'union qui vient d'être décrite peut être reproduite autant que nécessaire. Ainsi, dans l'exemple illustré à la figure 1, après avoir extrait les deux modules clés précités à l'issue de la première étape de transfert I, l'utilisateur insère alors dans le support de clé 2 le module clé original Cc qui contient les droits d'utilisation du logiciel Lc et le module clé Cab obtenu à l'issue de l'opération d'union précédente. Le logiciel de gestion de clés effectue alors au cours d'une seconde étape de transfert III une opération d'union à l'issue de laquelle les trois droits correspondant respectivement aux logiciels La, Lb et Lc sont réunis sur un module clé unique qui contenait au début de seconde étape de transfert III l'union des droits d'utilisation des logiciels La et Lb, et qui est maintenant repérée sur la figure 1 par la référence Cabc. Le module clé Cc qui contenait initialement les droits d'utilisation du logiciel Lc est à l'issue de la seconde étape de transfert III vidé de tous droits d'utilisation et est repérée sur la figure 1 par la référence Cc0.

A l'issue de ces deux étapes de transfert II et III, l'utilisateur dispose alors en IV d'un module clé de travail contenant l'union des droits d'utilisation associés respectivement aux trois logiciels La, Lb et Lc, et de deux modules clés désormais vides de tous droits Ca0 et Cb0. Il pourra alors utiliser les trois logiciels La, Lb et Lc dans la limite des droits d'utilisation tout en n'occupant qu'un emplacement de support de clé.

Le procédé selon l'invention permet en outre de maintenir l'accès et l'utilisation du port d'entrée/sortie sur lequel est connecté le support de clé, pour y connecter un dispositif périphérique, tel qu'une imprimante, une mémoire de masse, ou encore un périphérique de communication.

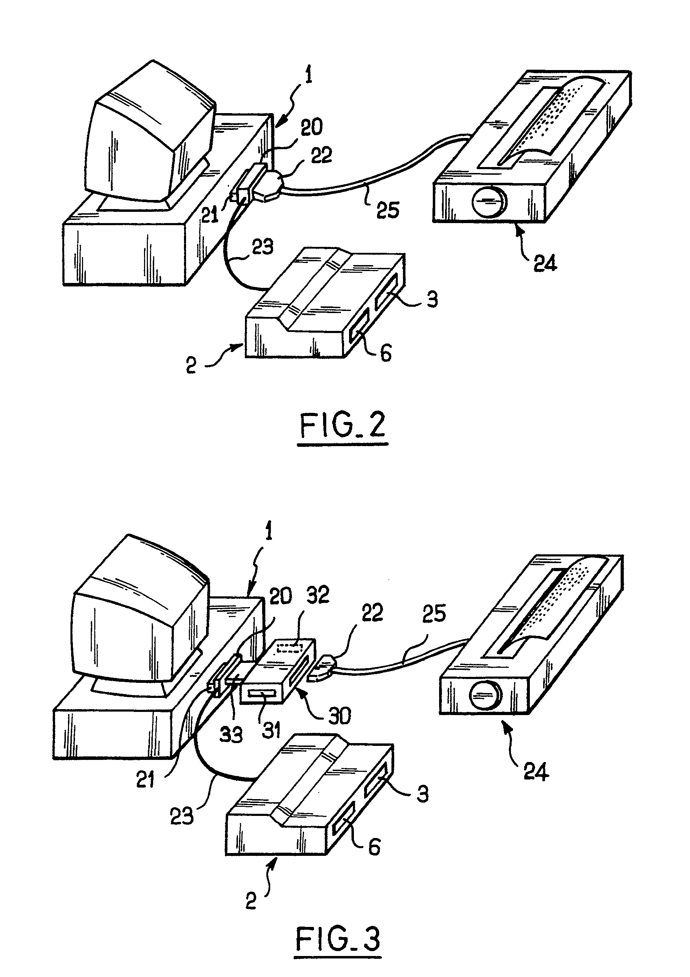

Ainsi, en référence à la figure 2, le support de clé 2 est relié au microordinateur 1 via son port parallèle 21 qui permet habituellement la connexion d'une imprimante avec communication de type Centronics. Il est prévu selon l'invention un agencement particulier qui permet une connexion simultanée du support de clé 2 et d'une imprimante 24. Le support de clé 2 équipé de deux logements de clé 3,6 est relié au port parallèle 21 via un câble muni d'une prise de type gigogne 20 qui peut aussi accueillir une prise de type Centronics 22 à l'extrémité d'un câble de connexion 25 de l'imprimante 24.

Dans une autre forme de mise en oeuvre du procédé selon l'invention, deux types de support de clé distincts peuvent être connectés au microordinateur 1, tout en maintenant l'utilisation d'un dispositif périphérique, notamment d'une imprimante 24. Ainsi, on peut à la fois utiliser un support de clé 2 accueillant des modules clés pouvant être soumis aux opérations d'union précitées et un autre support de clé 30 accueillant dans des fentes 31 et 32 des modules clés qui peuvent être de structure et de format différents. Pour cela, il est prévu une prise de type gigogne 20 permettant la connexion du support de clé 2 via le câble de connexion 23 et du second support de clé via le connecteur 33. Le second support de clé 30 présente un connecteur de type Centronics pouvant accueillir une prise d'imprimante 22 reliée via un câble de connexion 25 à l'imprimante 24.

Bien entendu, l'invention n'est pas limitée aux exemples décrits et de nombreux aménagements peuvent être apportés à ces exemples sans sortir du cadre de l'invention.

Ainsi, ce même procédé peut aussi s'appliquer à la protection de logiciels exploités sur des automates programmables.

En outre, le procédé selon l'invention n'est pas limité au cas particulier de trois logiciels qui vient d'être décrit et peut bien sûr être étendu à un grand nombre de logiciels dans la limite de la capacité du microordinateur hôte. On peut aussi envisager d'autres types de modules clés que ceux qui viennent d'être décrits, en particulier d'une géométrie ou d'une technologie différente.

**Revendications**

1. Procédé de configuration d'un poste de travail informatique (1,10) ou d'automatisme industriel sur lequel sont implantés plusieurs logiciels (La,Lb,Lc) à chacun desquels sont associés des droits d'utilisation respectifs contenus dans un module clé original distinct (Ca,Cb,Cc) destiné à coopérer avec ledit poste de travail (1,10) pour autoriser une continuité d'exploitation dudit logiciel (La, Lb, Lc), caractérisé en ce qu'il comprend une succession d'étapes de transfert (II,III), chaque étape de transfert (II,III) réalisant l'union de droits contenus initialement dans deux modules clés (Ca,Cb;Cc,Cab) et leur transfert dans l'un (Cab,Cabc) desdits modules clés, l'autre module clé (Ca0,Cc0) étant rendu vide de tout droit, de sorte qu'à l'issue de cette succession d'étapes de transfert (II,III), on dispose d'un module clé original unique (Cabc) contenant l'ensemble des droits d'utilisation associés aux logiciels implantés (La,Lb,Lc) sur le poste de travail (1,10), l'ensemble des autre modules clés (Ca0,Cc0) étant rendus vides de tout droit.

2. Procédé selon la revendication 1, caractérisé en ce que les étapes de transfert (II, III) sont réversibles et en ce qu'il comprend en outre , au titre de la réversibilité des étapes de transfert (II,III), au moins une opération de partition mettant en oeuvre un module clé original (Cab,Cabc) contenant plusieurs ensembles de droits d'utilisation correspondant à des logiciels utilisés (La,Lb;La,Lb,Lc) sur le poste de travail (1,10) et un module clé vierge (Ca0,Cc0), et au cours de laquelle une partie des droits d'utilisation est transférée dans le module clé initialement vierge (Ca0,Cc0), la partie restante étant maintenue dans le module clé original (Cb,Cab).

3. Système de configuration d'un poste de travail informatique (1,10) sur lequel sont implantés plusieurs logiciels (La,Lb,Lc) à chacun desquels sont associés des droits d'utilisation respectifs contenus dans un module clé original distinct (Ca,Cb,Cc), mettant en oeuvre le procédé selon les revendications précédentes, comprenant des moyens de support (2;11,12) pour recevoir simultanément au moins deux modules clés dans des emplacements adaptés (3,6;11,12) et reliés au poste de travail informatique (1,10), caractérisé en que ces moyens de support (2;11,12) coopèrent avec le poste de travail informatique (1) pour générer à partir de deux modules clés originaux (Ca,Cb;Cab,Cc) contenant chacun des droits d'utilisation associés à un ou plusieurs logiciels (La,Lb;La,Lb,Lc), un module clé original (Cab,Cabc) contenant alors l'union desdits droits d'utilisation et un module clé vidé de tout droit (Ca0,Cc0).

4. Système selon la revendication 3, le poste de travail étant un microordinateur (1) de type compatible et les moyens de support de clé (2) étant connectés sur un port d'entrée/sortie (21) du microordinateur (1), caractérisé en ce qu'il comprend en outre des moyens (20) pour permettre la connexion simultanée d' un dispositif périphérique, notamment une imprimante (24) et des moyens de support de clé (2) sur le port d'entrée/sortie (21).

5. Système selon la revendication 4, caractérisé en ce qu'il est agencé pour intégrer des moyens supplémentaires de support de clé (30,31,32) destinés à recevoir des modules clés non compatibles avec les modules clés mis en oeuvre dans les revendications précédentes et ne pouvant pas faire l'objet d'opérations d'union, de sorte que peuvent être simultanément connectés au port d'entrée/sortie (21) les moyens de support (2) recevant les modules clés originaux susceptibles d'opérations d'union de droits, les moyens de support supplémentaires (30), et un dispositif

périphérique (24).

FIG_1

EP 0 457 655 A1

FIG_2

FIG_3

Office européen
des brevets

## RAPPORT DE RECHERCHE EUROPEENNE

Numero de la demande

EP    91 40 1202

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|-----------|-------------------------------------------------------------------------------|-------------------------|--------------------------------------|
| A | EP-A-268 139 (IBM)<br>* colonne 9, ligne 20 - ligne 29 *<br>* colonne 9, ligne 43 - colonne 10, ligne 16 *<br>* colonne 11, ligne 41 - ligne 52 *<br>--- | 1-3 | G06F1/00 |
| A | WO-A-8 809 971 (PERSONAL CAD SYST.)<br>* page 2, ligne 20 - page 3, ligne 34; figure 2 *<br>--- | 1,3-5 | |
| A | EP-A-314 530 (MICROPHAR)<br>* abrégé; figure 1 *<br>----- | 3-5 | |

| | DOMAINES TECHNIQUES RECHERCHES (Int. Cl.5) |
|--|--------------------------------------------|
| | G06F |

Le présent rapport a été établi pour toutes les revendications

| Lieu de la recherche | Date d'achèvement de la recherche | Examinateur |
|----------------------|-----------------------------------|-------------|
| LA HAYE | 31 JUILLET 1991 | MOENS R.A. |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons
...........................................................................
& : membre de la même famille, document correspondant

EPO FORM 1503 03.82 (P0402)